# EUROPEAN PATENT APPLICATION

(11) **EP 3 503 017 A1**
(43) Date of publication of application: **26.06.2019**
(21) Application number: 17210208.9
(22) Date of filing: 22.12.2017
(51) Int. Cl.: G06T 5/00

(54) **METHOD AND DISPLAY DEVICE**

(71) Applicant: Vestel Elektronik Sanayi ve Ticaret A.S., 45030 Manisa (TR)
(72) Inventor: KIRGIZ, Gamze, 45030 Manisa (TR); EREN, Sibel, 45030 Manisa (TR)
(74) Representative: Ascherl, Andreas

(57) **Abstract**

The present invention provides a method for modifying image content (101) to improve image perception especially for deuteranope people, the method comprising identifying (S1, S11) regions of a first color (105) and regions of a second color (106) in the image content (101), determining (S2, S12) the luminance values of the pixels in the regions of the first color (105) and the regions of the second color (106), and darkening (S3, S13) the regions of the first color (105) and brightening (S4) the regions of the second color (106), or brightening the regions of the first color (105) and darkening the regions of the second color (106) based on a difference of the luminance values of the regions of the first color (105) and the luminance values of the regions of the second color (106). Further, the present invention provides a respective display device (100).

## Description

### TECHNICAL FIELD

The invention relates to a method for modifying image content to improve image perception especially for deuteranope people. Further, the present invention provides a respective display device.

### BACKGROUND

Although applicable to any color perception impairment of users, the present invention will mainly be described in conjunction with deuteranope people.

The human visual apparatus may suffer different impairments, like myopia, hyperopia or the like. Another type of impairments refers to the color perception or an impaired color perception. Deuteranope people for example are not capable of distinguishing red and green. It is therefore difficult for these people to perceive details that are shown in red or green color.

Methods have been provided to modify an image for deuteranope people, where the color hues are modified, i.e. the colors are changed such that no red or green appear in the image. However, this drastically changes the image and people with a normal sight may be disturbed by these color changes.

Accordingly, there is a need for providing an improved image that may be perceived by people with a normal sight as well as people with an impaired perception of colors.

### SUMMARY OF THE INVENTION

The present invention provides a method with the features of claim 1 and a display device with the features of claim 11.

Accordingly, it is provided:
A method for modifying image content to improve image perception especially for deuteranope people, the method comprising identifying regions of a first color and regions of a second color in the image content, determining the luminance values of the pixels in the regions of the first color and the regions of the second color, and darkening the regions of the first color and brightening the regions of the second color, or brightening the regions of the first color and darkening the regions of the second color based on a difference of the luminance values of the regions of the first color and the luminance values of the regions of the second color.

Further, it is provided:
A display device for modifying image content to improve image perception especially for deuteranope people, the display device comprising a display configured to display the modified image content, and a control unit coupled to the display and configured to identify regions of a first color and regions of a second color in the image content, determine the luminance values of the pixels in the regions of the first color and the regions of the second color, and darken the regions of the first color and brighten the regions of the second color, or brighten the regions of the first color and darken the regions of the second color based on a difference of the luminance values of the regions of the first color and the luminance values of the regions of the second color, and to provide the display with the modified image content.

The present invention is based on the finding, that for some people it may be difficult to visually distinguish two colors, like e.g. red and green for deuteranope people.

However, these people are usually capable of perceiving luminance or brightness differences effectively.

The present invention therefore tries to modify image content such that the image content of the first color and the second color is dynamically adjusted such that it may be better distinguished by people with limited color perception. Since some people may have difficulties distinguishing two different colors, another property of the image content is adjusted with the present invention that may help such people to better perceive the details of the image content.

In nature, a lot of information is encoded in brightness changes and only little information is encoded in color changes. For example, the structure of a piece of wood becomes visible because of brightness changes, even if the complete piece of wood is of a brown color. The human visual system has adapted to this natural phenomenon and is very sensitive to brightness changes and a lot less sensitive to color changes.

This means that even though a person may not perceive differences between two different colors, that person may still perceive the structure of an object, if the different colors are provided with different brightness values. In contrast, for example a deuteranope person may not perceive any structure if a red and a green detail are next to each other and comprise the same brightness.

The present invention makes use of this fact and dynamically adapts the brightness of regions in the image content by increasing brightness for regions of a first color and decreasing brightness for regions of a second color, or vice versa. This means that e.g. for deuteranope people, red regions may be increased in brightness and green regions may be darkened or decreased in brightness or that green regions may be increased in brightness and red regions may be darkened or decreased in brightness.

In addition, the present invention determines the amount of brightening or darkening based on the luminance values of the pixels in the regions of the first color and the second color. This means that the present invention does not use a fixed factor or amount for darkening and brightening the different colors. Instead, the present invention tries to determine the necessary amount of brightening and darkening to provide the best result to the person that requires an aid for perceiving two different colors.

The factor, amount or intensity of darkening and brightening may e.g. be user selectable. If for example, the present invention is used on a TV screen, a computer screen, a smartphone screen or the like, a user may be provided with a configuration menu that allows the user to configure the details of the darkening and brightening.

The present invention therefore provides people that have difficulties in perceiving two different colors, like e.g. red and green, with an aid that at least allows these people to perceive the structural details by increasing the difference of the brightness of the two colors in the image content.

It is understood, that the image content may be a single image or that the present invention may also be applied to a sequence of images, e.g. a video, dynamically. In the case of a sequence of images, the amount of brightening and darkening may be determined individually for every single image in the sequence.

It is further understood, that in a possible embodiment regions for more than two colors may be identified in the image content and the pixels of more than two of the identified regions may be modified. Possible colors comprise for example red, green, blue, cyan, magenta, yellow, and flesh (skin tone).

Further embodiments of the present invention are subject of the further subclaims and of the following description, referring to the drawings.

In an embodiment, the first color may be red and the second color may be green.

Deuteranope is the most common form of impairment of the human visual apparatus that affects the color perception. Deuteranope people may not distinguish the colors red and green at all or may at least have difficulties in distinguishing these colors.

Therefore, by using red as the first color and green as the second color, the present invention may be perfectly adapted to aid deuteranope people in perceiving the details in the image content.

It is however, understood, that any other combination of two colors may be used with the present invention. In addition, the two colors may be mutually exclusive, like e.g. red and green or blue and yellow. The mutually exclusive colors are colors that may not mix without resulting in another color, like e.g. blue and yellow resulting in green, or red and green resulting in brown. The details of mutually exclusive colors are e.g. discussed in the color opponent process color theory.

In another embodiment, determining the luminance values of the pixels in the regions of the first color and the regions of the second color may comprise calculating the average picture level for the regions of the first color and the regions of the second color.

The average picture level, APL, regarding a whole image, refers to the brightness of the image content averaged across the whole image in relation to the maximum brightness of the image content. For example a completely white image would comprise a maximum APL value, while a completely black image would comprise a minimum APL value.

Regarding the regions of the two different colors, the present invention determines the APL region-wise. This means that the APL value is not determined for the whole image content as a single value. Instead one APL value is determined for the regions of the first color and one APL value is determined for the regions of the second color.

The APL values then represent the averaged brightness of the regions of the different colors in the image content and therefore allow determining how much the brightness has to be modified in order to improve the perception of the two colors. For example, if the brightness of the regions of the first color is very similar to the brightness of the regions of the second color, the amount of darkening and brightening may be rather large, to better distinguish the two colors, and vice versa.

In a further embodiment, a magnitude of darkening and brightening may be inverse to the difference of the luminance values of the regions of the first color and the luminance values of the regions of the second color.

An inverse magnitude in this context refers to a high difference of the brightness or luminance, e.g. the APL value, of the regions of the first color and the regions of the second color leading to only a little darkening and brightening of the respective regions or pixels. In contrast, a low or small difference of the brightness or luminance, e.g. the APL value, of the regions of the first color and the regions of the second color will lead to a stronger darkening and brightening of the respective regions or pixels.

This scheme may be chosen because if the regions of the first color and the regions of the second color comprise strongly different brightness for the two colors, people with impaired color vision may directly perceive the structure based on the brightness variations in the image content. If however, the brightness variations are only small, i.e. the brightness of the regions of the first color and the regions of the second color is similar, people with an impairment in color vision will have difficulties in perceiving the structural details and a stronger change of the brightness of the respective pixels will emphasize the structural details for these people.

In an embodiment, brightening may comprise increasing the brightness of the pixels of the respective region by a predetermined first value, and darkening may comprise decreasing the brightness of the pixels of the respective region by a predetermined second value.

The above mentioned first value and the second value may both e.g. be provided as an absolute value or as a percentage value. Changing the brightness may e.g. be performed by adding a value to each of the RGB color channels of a pixel in the RGB color space. A positive value will brighten the respective pixel and a negative value will darken the respective pixel. It is understood, that this may also be performed in any other color space. For example, in the YCbCr color space, the Y value of the respective pixel may be changed accordingly.

It is understood, that the predetermined values may be variable values that are determined based on the difference of the brightness or luminance, e.g. the APL value, of the regions of the first color and the regions of the second color. The predetermined values may then be used to modify all the pixels of the respective region, independent of their base brightness or luminance. In contrast, a percentage based value may define a percentage for darkening or brightening the respective pixels based on the base brightness of the single pixels. The base brightness refers to the brightness of the pixels prior to modifying the brightness.

Modifying the brightness may e.g. be performed by adding a respective value, positive or negative, to the Y channel of the respective pixel in the YCbCr color space or by adding or subtracting a percentage of the base value to or from the Y channel.

In a further embodiment, darkening the regions of the first color and brightening the regions of the second color or brightening the regions of the first color and darkening the regions of the second color may comprise calculating dynamic contrast curves for the regions of the first color and the regions of the second color based on the difference of the luminance values of the regions of the first color and the luminance values of the regions of the second color, and applying the calculated dynamic contrast curves to the regions of the first color and the green color regions respectively.

The term dynamic contrast curves refer to curves that may be applied to the regions of the first and the second color and that affect the brightness of the respective colors. Such curves may e.g. be used in graphics manipulation tools in computers to adjust the contrast of an image. The curves provide a mapping for every input brightness to an output brightness. This means that the base brightness of a pixel will be used as input for mapping according to the respective dynamic contrast curve and that the value that is mapped by the curve as output for the respective input will be used as the new brightness of the respective pixel.

A contrast curve that is a straight line and maps every input value to an identical output value, i.e. a straight line with a 45° angle in a diagram with two identically scaled axis, does not change the brightness of the image content. A contrast curve that is above the straight line will increase the brightness of the respective pixels and a contrast curve that is below the straight line will decrease the brightness of the respective pixels or darken the respective pixels, accordingly.

With the above mentioned dynamic contrast curves, it is therefore possible to provide a specific mapping for every single input brightness. This for example means, that values at the maximum or minimum brightness may be only slightly modified, while values in the center range of the brightness value range may be modified more.

In a further embodiment, the method may comprise converting the image content into the YCbCr color space.

The YCbCr color space is adapted to the human visual apparatus that has an increased sensitivity for luminance or luma information and a reduced sensitivity for color or chroma information. The YCbCr color space provides three channels, the Y channel that represents brightness or luma information, the Cb channel that represents color information for blue and yellow colors, and the Cr channel that represents color information for red and green colors.

The YCbCr color space for example allows providing the luma information Y with much higher detail (i.e. data rate) than the color or chroma information in the Cb and Cr channels.

The Cb channel represents the deviation of the respective pixel from grey regarding blue and yellow. The Cr channel represents the deviation of the respective pixel from grey regarding the colors red and green. These colors were chosen, because blue and yellow are mutually exclusive colors and red and green are mutually exclusive colors.

Using the YCbCr color space allows easily determining which color a respective pixel comprises by simply analyzing the Cb and Cr channels of the respective pixel. Further, adjusting the brightness may then simply be performed by modifying the Y channel. It is for example easily possible to determine which pixel pertains to any one of the above mentioned colors red, green, blue, cyan, magenta, yellow, and flesh (skin tone) based on the CbCr plane of the YCbCr color space.

In an embodiment, determining regions of the first color and regions of the second color may comprise selecting for the regions of the first color pixels of the image content that in the YCbCr color space comprise a Cb value and a Cr value that indicate a red pixel and selecting for the regions of the second color pixels of the image content that in the YCbCr color space comprise a Cb value and a Cr value that indicate a green pixel.

In the YCbCr color space as indicated above the Cr value represents the two colors red and green. The transition from red to green is usually at the center or middle of the value range. However, not only the Cr value may be analyzed. The Cb value also has to be taken into account for every pixel. In the YCbCr color space only those pixels that have a Cb value of about less than the center or middle value of the available value range are red or green. Pixels with a larger Cb value will be in the pink or blue color range, depending on their Cr value.

This means that a separation between red and green color regions may e.g. be performed by selecting the respective pixels based on the Cb and Cr values. This provides a very simple scheme for selecting the single color regions.

In a further embodiment, determining regions of the first color and regions of the second color may comprise selecting pixels of the image content that in the YCbCr color space comprise a Cb value that is lower than the center value of the value range of the Cb value, especially lower than a threshold value that is lower than the center value.

If the CbCr plane of the YCbCr color space is defined with a 0 in the center, the green and red pixels will be on the negative side of the Cb axis. As alternative, if a positive value range is provided, the green and red pixels will comprise a Cb value that is lower than the center or middle value of the respective number or value range.

For selecting e.g. red color regions all pixels that comprise a Cr value higher than the middle value of the value range of the Cr channel and that comprise a Cb value lower than the middle value of the value range of the Cb channel may be selected. For selecting green color regions all pixels that comprise a Cr value lower than the middle value of the value range of the Cr channel and that comprise a Cb value lower than the middle value of the value range of the Cb channel may be selected.

In addition, to provide a more strict separation, a threshold value may be defined that is lower than the middle or center value of the color range of the Cb channel. This allows flexibly configuring the color determination according to an application's requirements or user's requirements.

In another embodiment, determining regions of the first color and regions of the second color may comprise selecting for the respective regions pixels of the image content that in a CbCr plane of the YCbCr color space lay within a respectively defined selection region.

The selection regions may e.g. be defined as sections or cuts of the CbCr plane. The selection regions may for example be defined by geometric elements, like e.g. circles, ellipses, straight lines, curves or the like that may be overlaid over the CbCr plane at least in part such that selection regions are defined the CbCr plane. All the pixels that lay within one of the regions are added to a region of the first color or a region of the second color, respectively.

It is clear, that different regions have to be differentiated. The regions of the first and the second color are regions in the original image content, i.e. regions that may be visualized in the original image content. The selection regions in contrast are regions in the CbCr plane of the YCbCr color space and are used for selecting which pixels pertain to a region of the first color or a region of the second color or none of these regions at all.

Providing the ability to define which pixels should be included in a region of a respective color by providing geometric objects that are overlaid over the CbCr plane of the YCbCr color space allows flexibly selecting the single pixels.

It is further understood, that different such selection regions may be defined for different Y values or ranges, i.e. for different brightness values or ranges.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
Fig. 1 shows a flow diagram of an embodiment of a method according to the present invention;
Fig. 2 shows a flow diagram of another embodiment of a method according to the present invention;
Fig. 3 shows a block diagram of an embodiment of a display device according to the present invention;
Fig. 4 shows a diagram of an embodiment of possible dynamic contrast curves for use in an embodiment of a method according to the present invention;
Fig. 5 shows a diagram of another embodiment of possible dynamic contrast curves for use in an embodiment of a method according to the present invention; and
Fig. 6 shows a diagram of a CbCr plane for use in an embodiment of a method according to the present invention.

In the figures like reference signs denote like elements unless stated otherwise.

### DETAILED DESCRIPTION OF THE DRAWINGS

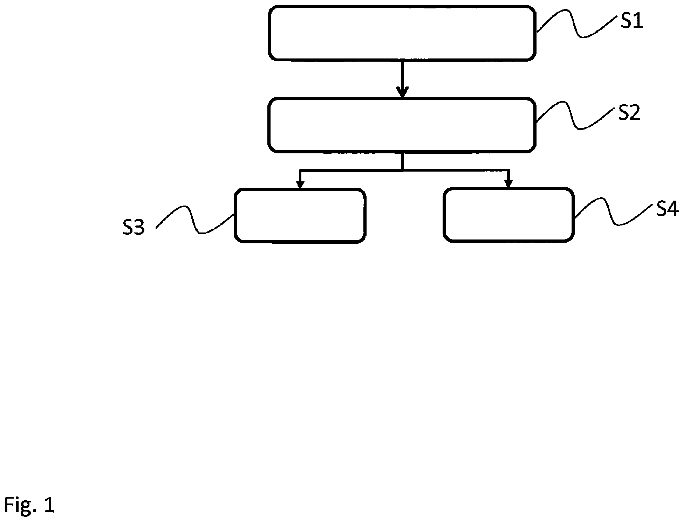

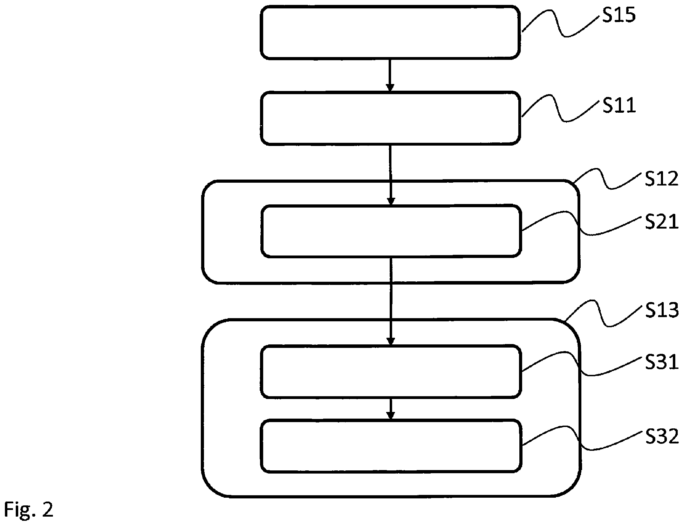

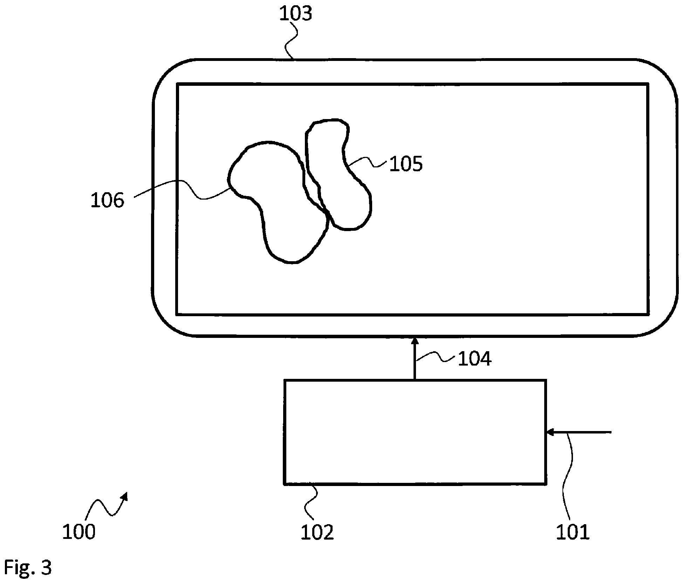

For sake of clarity in the following description of the method based Figs. 1 and 2 the reference signs used above in the description of the other Figs. 3 - 5 will be maintained.

Fig. 1 shows a flow diagram of an embodiment of a method for modifying image content 101 to improve image perception especially for deuteranope people.

The method comprises identifying S1 regions of a first color 105 and regions of a second color 106 in the image content 101, determining S2 the luminance values of the pixels in the regions of the first color 105 and the regions of the second color 106, and darkening S3 the regions of the first color 105 and brightening S4 the regions of the second color 106, or brightening the regions of the first color 105 and darkening the regions of the second color 106 based on a difference of the luminance values of the regions of the first color 105 and the luminance values of the regions of the second color 106.

Especially for deuteranope people, the first color may be red and the second color may be green. It is however understood, that any other two colors may also be chosen.

Especially, when the present invention is used e.g. on a TV set, a computer, a smartphone or any other electronic device, the user may e.g. be presented with a configuration menu that allows the user to select the first color and the second color.

Further, the magnitude of darkening and brightening may be inverse to the difference of the luminance values of the regions of the first color 105 and the luminance values of the regions of the second color 106. This means, that the magnitude of darkening and brightening is high of the first color and the second color comprise a similar average brightness in the image content. In contrast, the magnitude of darkening and brightening is low if the first color and the second color already comprise very different brightness values in the image content. It is understood, that large brightness changes are not necessary, if the first color and the second color are already present with highly different brightness values, because a user with impaired color perception may already perceive the two colors separately by their brightness difference.

Brightening S4 may e.g. comprise increasing the brightness of the pixels of the respective region by a predetermined first value, e.g. the same absolute or percentage value is applied to all pixels independently of their original or base brightness. Darkening S3 may comprise decreasing the brightness of the pixels of the respective region by a predetermined second value, i.e. the same absolute or percentage value is applied to all respective pixels independently of their original or base brightness.

It is understood, that although steps S3 and S4 are shown as parallel steps, they may also be performed consecutively one after the other.

Fig. 2 shows a flow diagram of another embodiment of a method for modifying image content 101 to improve image perception especially for deuteranope people. The method of Fig. 2 is based on the method of Fig. 1 and therefore also comprises identifying S11 regions of a first color 105 and regions of a second color 106 in the image content 101, determining S12 the luminance values of the pixels in the regions of the first color 105 and the regions of the second color 106, and darkening S13 the regions of the first color 105 and brightening the regions of the second color 106, or brightening the regions of the first color 105 and darkening the regions of the second color 106 based on a difference of the luminance values of the regions of the first color 105 and the luminance values of the regions of the second color 106.

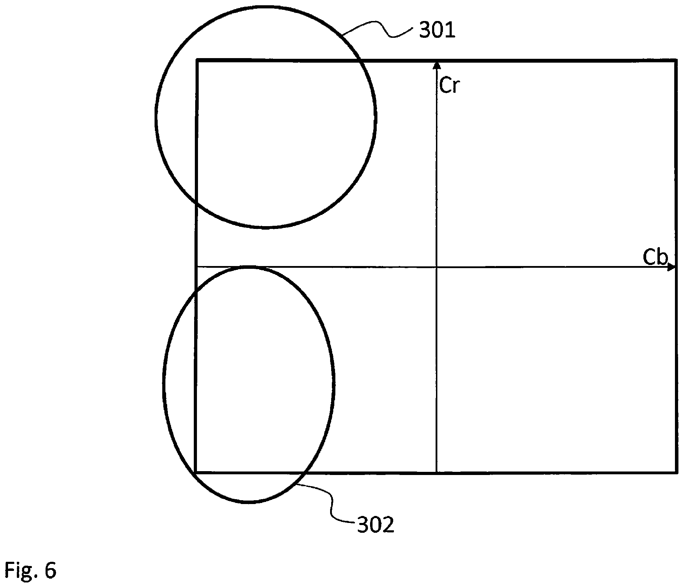

However, prior to identifying S11 the regions of the first color 105 and the regions of the second color 106, the method comprises converting S15 the image content 101 into the YCbCr color space. As already explained above, the YCbCr color space has some advantages, especially because of its simulation of or adaption to the human visual apparatus. In the YCbCr color space it is for example easily possible to change the brightness of a pixel simply by changing the Y value. Further, it is possible to determine the color of a pixel by analyzing only two values, the Cb value and the Cr value. This will be exemplified in the description regarding Fig. 6.

In this respect, it is understood, that identifying S11 may comprise identifying S11 regions of the first color 105 and regions of the second color 106 by selecting for the regions of the first color 105 pixels of the image content 101 that in the YCbCr color space comprise a Cb value and a Cr value that indicate a red pixel and selecting for the regions of the second color 106 pixels of the image content 101 that in the YCbCr color space comprise a Cb value and a Cr value that indicate a green pixel.

It is possible to identify the respective pixels e.g. by selecting pixels of the image content 101 that in the YCbCr color space comprise a Cb value that is lower than the center value of the value range of the Cb value, especially lower than a threshold value that is lower than the center value. Or by selecting for the respective regions pixels of the image content 101 that in a CbCr plane of the YCbCr color space lay within a respectively defined selection region 301, 302.

The step of determining S12 comprises calculating S21 the average picture level, APL, for the regions of the first color 105 and the regions of the second color 106 separately. The two different APL values may then easily be compared to determine the magnitude of darkening and brightening S13. It can be seen that in Fig. 2 the steps of darkening S3 and brightening S4 of Fig. 1 are unified into a single step S13 that however comprises two sub-steps S31, S32.

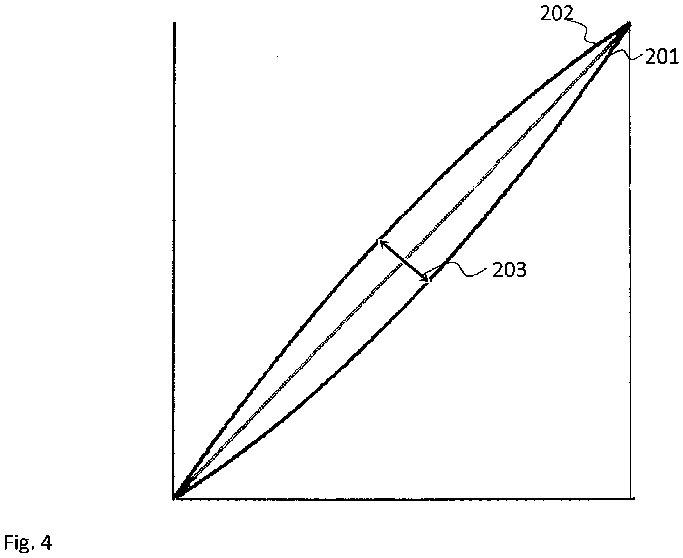

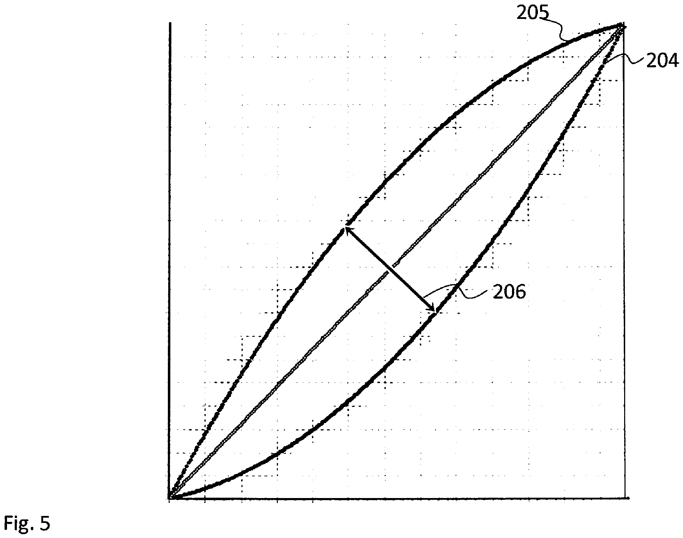

It is understood, that a formula may be provided for the magnitude of darkening and brightening S13 that maps the difference between the two APL values to a magnitude value. The magnitude value may e.g. be an absolute value or a percentage value as indicated above, that might be added or subtracted from the brightness values of the respective pixels. For the below mentioned dynamic contrast curves, the magnitude value may e.g. provide the maximum distance between the two curves, see e.g. Figs 4 and 5.

The step S31 comprises calculating S31 dynamic contrast curves 201, 202, 203, 204 for the regions of the first color 105 and the regions of the second color 106 based on the difference of the luminance values of the regions of the first color 105 and the luminance values of the regions of the second color 106. Step S32 comprises applying the calculated dynamic contrast curves 201, 202, 203, 204 to the regions of the first color 105 and the green color regions respectively.

Fig. 3 shows a block diagram of an embodiment of a display device 100 that may perform a method according to the present invention. The display device 100 comprises a display 103 configured to display the modified image content 104, and a control unit 102 coupled to the display 103 and configured to identify regions of a first color 105 and regions of a second color 106 in the image content 101, determine the luminance values of the pixels in the regions of the first color 105 and the regions of the second color 106, and darken the regions of the first color 105 and brighten the regions of the second color 106, or brighten the regions of the first color 105 and darken the regions of the second color 106 based on a difference of the luminance values of the regions of the first color 105 and the luminance values of the regions of the second color 106, and to provide the display 103 with the modified image content 104.

It is understood, that especially for use by deuteranope people, the first color may be red and the second color may be green.

The control unit 102 may be configured to calculate the average picture level for the regions of the first color 105 and the regions of the second color 106 to determine the luminance values of the pixels in the regions of the first color 105 and the regions of the second color 106. As alternative or in addition, the control unit 102 may be configured to set a magnitude of darkening and brightening inverse to the difference of the luminance values of the regions of the first color 105 and the luminance values of the regions of the second color 106.

The control unit 102 may also be configured to increase the brightness of the pixels of the respective region by a predetermined first value for brightening, and the control unit 102 may be configured to decrease the brightness of the pixels of the respective region by a predetermined second value for darkening. As alternative, the control unit 102 may calculate dynamic contrast curves 201, 202, 203, 204 for the regions of the first color 105 and the regions of the second color 106 based on the difference of the luminance values of the regions of the first color 105 and the luminance values of the regions of the second color 106, and to apply the calculated dynamic contrast curves 201, 202, 203, 204 to the regions of the first color 105 and the green color regions, respectively, for darkening the regions of the first color 105 and brightening the regions of the second color 106 or brightening the regions of the first color 105 and darkening the regions of the second color 106.

The control unit 102 may also convert the image content 101 into the YCbCr color space prior to identifying the regions of the first color 105 and the regions of the second color 106.

The control unit 102 may select for the regions of the first color 105 pixels of the image content 101 that in the YCbCr color space comprise a Cb value and a Cr value that indicate a red pixel and selecting for the regions of the second color 106 pixels of the image content 101 that in the YCbCr color space comprise a Cb value and a Cr value that indicate a green pixel. The control unit 102 may also select pixels of the image content 101 that in the YCbCr color space comprise a Cb value that is lower than the center value of the value range of the Cb value, especially lower than a threshold value that is lower than the center value, or to select for the respective regions pixels of the image content 101 that in a CbCr plane of the YCbCr color space lay within a respectively defined selection region 301, 302.

Fig. 4 shows a diagram of an embodiment of possible dynamic contrast curves 201, 202 for use in an embodiment of a method according to the present invention. The abscissa of the shown coordinate system represents the input brightness value of a respective pixel and the ordinate of the shown coordinate system represents the modified brightness value of the respective pixel. In the YCbCr color space, the brightness may e.g. be provided as the Y value of the respective pixel.

In the shown example, the two axes both comprise the same scaling. No specific numbers are indicated, since the scales may be provided in different ways, e.g. as absolute values of specific value ranges, e.g. between 0 and 255, as percentage between 0% and 100% or the like.

In the diagram of Fig. 2 one of the dynamic contrast curves 201, 202 may be selected for and applied to the pixels that pertain to a region of the first color and the other dynamic contrast curve 201, 202 may be selected for and applied to the pixels that pertain to a region of the second color.

It can be seen that the magnitude 203 of the brightness modification in this example is defined as the maximum distance between the dynamic contrast curves 201, 202, i.e. the distance in the center of the dynamic contrast curves 201, 202.

Fig. 5 shows a diagram of another embodiment of two other possible dynamic contrast curves 204, 205 for use in an embodiment of a method according to the present invention. As in Fig. 4 the abscissa of the shown coordinate system represents the input brightness value of a respective pixel and the ordinate of the shown coordinate system represents the modified brightness value of the respective pixel. In the YCbCr color space, the brightness may e.g. be provided as the Y value of the respective pixel.

In the shown example, the two axes both comprise the same scaling. No specific numbers are indicated, since the scales may be provided in different ways, e.g. as absolute values of specific value ranges, e.g. between 0 and 255, as percentage between 0% and 100% or the like.

In the diagram of Fig. 2 one of the dynamic contrast curves 204, 205 may be selected for and applied to the pixels that pertain to a region of the first color and the other dynamic contrast curve 204, 205 may be selected for and applied to the pixels that pertain to a region of the second color.

It can be seen that the magnitude 206 of the brightness modification in this example is also defined as the maximum distance between the dynamic contrast curves 204, 205, i.e. the distance in the center of the dynamic contrast curves 204, 205.

Comparing the diagrams of Figs. 4 and 5 it may be seen that the magnitude 206 is larger than the magnitude 203. This means, that the dynamic contrast curves 204, 205 modify the original image content more than the dynamic contrast curves 201, 202, i.e. they separate the brightness of the pixels of the first color and the second color more than the dynamic contrast curves 201, 202.

The dynamic contrast curves 204, 205 may therefore e.g. be used for image content that comprises a smaller difference of the luminance values of the regions of the first color 105 and the luminance values of the regions of the second color 106, and vice versa.

Fig. 6 shows a diagram of a CbCr plane for use in an embodiment of a method according to the present invention. In the CbCr plane of the YCbCr color space, the color red is mainly represented by the upper left corner and the color green mainly by the lower left corner.

As can be seen in Fig. 6 it is possible to freely define which pixels, i.e. pixels of which CbCr value pair will be accepted as pertaining to the color red and to the color green.

It is understood, that the chosen geometric forms, a circle and an ellipse, may be freely scaled and modified according to the respective application. It is further understood, that any other geometric form may be used, that separates at least a section of the CbCr plane.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a method for modifying image content 101 to improve image perception especially for deuteranope people, the method comprising identifying S1, S11 regions of a first color 105 and regions of a second color 106 in the image content 101, determining S2, S12 the luminance values of the pixels in the regions of the first color 105 and the regions of the second color 106, and darkening S3, S13 the regions of the first color 105 and brightening S4 the regions of the second color 106, or brightening the regions of the first color 105 and darkening the regions of the second color 106 based on a difference of the luminance values of the regions of the first color 105 and the luminance values of the regions of the second color 106. Further, the present invention provides a respective display device 100.

### List of reference signs

- 100: display device
- 101: image content
- 102: control unit
- 103: display
- 104: modified image content

- 105: regions of a first color
- 106: region of a second color

- 201, 202, 204, 205: dynamic contrast curve
- 203, 206: magnitude

- 301, 302: selection region

- S1, S2, S3, S4, S11, S12, S13, S15: method steps
- S21, S31, S32: method steps

## Claims

1. Method for modifying image content (101) to improve image perception especially for deuteranope people, the method comprising:
identifying (S1, S11) regions of a first color (105) and regions of a second color (106) in the image content (101),
determining (S2, S12) the luminance values of the pixels in the regions of the first color (105) and the regions of the second color (106),
darkening (S3, S13) the regions of the first color (105) and brightening (S4) the regions of the second color (106), or brightening the regions of the first color (105) and darkening the regions of the second color (106) based on a difference of the luminance values of the regions of the first color (105) and the luminance values of the regions of the second color (106).

2. Method according to claim 1, wherein the first color is red and the second color is green.

3. Method according to any one of claims 1 and 2, wherein determining (S2, S12) the luminance values of the pixels in the regions of the first color (105) and the regions of the second color (106) comprises calculating (S21) the average picture level for the regions of the first color (105) and the regions of the second color (106).

4. Method according to any one of the preceding claims, wherein a magnitude of darkening and brightening is inverse to the difference of the luminance values of the regions of the first color (105) and the luminance values of the regions of the second color (106).

5. Method according to any one of the preceding claims, wherein brightening (S4) comprises increasing the brightness of the pixels of the respective region by a predetermined first value, and wherein darkening (S3, S13) comprises decreasing the brightness of the pixels of the respective region by a predetermined second value.

6. Method according to any one of the preceding claims 1 to 5, wherein darkening (S3, S13) the regions of the first color (105) and brightening (S4) the regions of the second color (106) or brightening the regions of the first color (105) and darkening the regions of the second color (106) comprises calculating (S31) dynamic contrast curves (201, 202, 203, 204) for the regions of the first color (105) and the regions of the second color (106) based on the difference of the luminance values of the regions of the first color (105) and the luminance values of the regions of the second color (106), and applying (S32) the calculated dynamic contrast curves (201, 202, 203, 204) to the regions of the first color (105) and the green color regions respectively.

7. Method according to any one of the preceding claims, comprising converting (S15) the image content (101) into the YCbCr color space.

8. Method according to claim 7, wherein identifying (S1, S11) regions of the first color (105) and regions of the second color (106) comprises selecting for the regions of the first color (105) pixels of the image content (101) that in the YCbCr color space comprise a Cb value and a Cr value that indicate a red pixel and selecting for the regions of the second color (106) pixels of the image content (101) that in the YCbCr color space comprise a Cb value and a Cr value that indicate a green pixel.

9. Method according to any one of the preceding claims 7 and 8, wherein identifying (S1, S11) regions of the first color (105) and regions of the second color (106) comprises selecting pixels of the image content (101) that in the YCbCr color space comprise a Cb value that is lower than the center value of the value range of the Cb value, especially lower than a threshold value that is lower than the center value.

10. Method according to any one of the preceding claims 7 and 8, wherein identifying (S1, S11) regions of the first color (105) and regions of the second color (106) comprises selecting for the respective regions pixels of the image content (101) that in a CbCr plane of the YCbCr color space lay within a respectively defined selection region (301, 302).

11. Display device (100) for modifying image content (101) to improve image perception especially for deuteranope people, the display device (100) comprising:
a display (103) configured to display the modified image content (104), and
a control unit (102) coupled to the display (103) and configured to identify regions of a first color (105) and regions of a second color (106) in the image content (101), determine the luminance values of the pixels in the regions of the first color (105) and the regions of the second color (106), and darken the regions of the first color (105) and brighten the regions of the second color (106), or brighten the regions of the first color (105) and darken the regions of the second color (106) based on a difference of the luminance values of the regions of the first color (105) and the luminance values of the regions of the second color (106), and to provide the display (103) with the modified image content (104).

12. Display device (100) according to claim 11, wherein the first color is red and the second color is green; and/or
wherein the control unit (102) is configured to calculate the average picture level for the regions of the first color (105) and the regions of the second color (106) to determine the luminance values of the pixels in the regions of the first color (105) and the regions of the second color (106); and/or
wherein the control unit (102) is configured to set a magnitude of darkening and brightening inverse to the difference of the luminance values of the regions of the first color (105) and the luminance values of the regions of the second color (106).

13. Display device (100) according to any one of the preceding claims 11 and 12, wherein the control unit (102) is configured to increase the brightness of the pixels of the respective region by a predetermined first value for brightening, and wherein the control unit (102) is configured to decrease the brightness of the pixels of the respective region by a predetermined second value for darkening; or
wherein the control unit (102) is configured to calculate dynamic contrast curves (201, 202, 203, 204) for the regions of the first color (105) and the regions of the second color (106) based on the difference of the luminance values of the regions of the first color (105) and the luminance values of the regions of the second color (106), and to apply the calculated dynamic contrast curves (201, 202, 203, 204) to the regions of the first color (105) and the green color regions, respectively, for darkening the regions of the first color (105) and brightening the regions of the second color (106) or brightening the regions of the first color (105) and darkening the regions of the second color (106).

14. Display device (100) according to any one of the preceding claims 11 to 13, wherein the control unit (102) is configured to convert the image content (101) into the YCbCr color space prior to identifying the regions of the first color (105) and the regions of the second color (106).

15. Display device (100) according to claim 14, wherein the control unit (102) is configured to select for the regions of the first color (105) pixels of the image content (101) that in the YCbCr color space comprise a Cb value and a Cr value that indicate a red pixel and selecting for the regions of the second color (106) pixels of the image content (101) that in the YCbCr color space comprise a Cb value and a Cr value that indicate a green pixel; and/or
wherein the control unit (102) is configured to select pixels of the image content (101) that in the YCbCr color space comprise a Cb value that is lower than the center value of the value range of the Cb value, especially lower than a threshold value that is lower than the center value, or to select for the respective regions pixels of the image content (101) that in a CbCr plane of the YCbCr color space lay within a respectively defined selection region (301, 302).
